Europäisches Patentamt

European Patent Office

Office européen des brevets

(19)

(11) Publication number: **0 030 469**
**B1**

# EUROPEAN PATENT SPECIFICATION

(45) Date of publication of patent specification: **09.05.84**

(51) Int. Cl.³: **G 11 B 5/58**

(21) Application number: **80304413.0**

(22) Date of filing: **05.12.80**

(54) Video tape recorder including tracking apparatus.

(30) Priority: **07.12.79 JP 159551/79**

(43) Date of publication of application:
**17.06.81 Bulletin 81/24**

(45) Publication of the grant of the patent:
**09.05.84 Bulletin 84/19**

(84) Designated Contracting States:
**DE FR GB NL**

(56) References cited:
**FR - A - 2 293 118**
**FR - A - 2 360 222**
**FR - A - 2 386 097**
**FR - A - 2 399 093**
**GB - A - 2 015 781**
**GB - A - 2 029 607**
**NL - A - 7 903 781**
**US - A - 4 141 047**
**US - A - 4 148 083**

(73) Proprietor: **Matsushita Electric Industrial Co., Ltd.**
**1006, Oaza Kadoma**
**Kadoma-shi Osaka-fu, 571 (JP)**

(72) Inventor: **Isaka, Takenobu**
**106, B-2, 3-1, Korigaoka**
**Hirakata-shi Osaka-fu (JP)**
Inventor: **Kobayashi Masaaki**
**1-17-2, Uguisudai**
**Kawanishi-shi Hyogo-ken (JP)**

(74) Representative: **Crawford, Andrew Birkby et al,**
**A.A. THORNTON & CO. Northumberland House**
**303-306 High Holborn**
**London WC1V 7LE (GB)**

The file contains technical information
submitted after the application was filed and not
included in this specification

Courier Press, Leamington Spa, England.

## Description

This invention relates to a video tape recorder for recording and reproducing video signals on a magnetic tape, and more particularly to position control of a video head when a plurality of video heads are used to reproduce the video signal recorded in a magnetic tape during reproduction.

In the prior art, as disclosed in patent specification U.S. 4,148,083, a reproducing system is provided with a rotary magnetic head arranged to scan video tracks recorded on a magnetic tape and a head deflector for deflecting the rotary magnetic head transversely to the tracks scanned. A control circuit supplies a control signal to the head deflector so that the rotary magnetic head scans the centre of the video tracks. In particular, the apparatus comprises an adder circuit for adding a signal from a memory circuit with a desired DC voltage signal from a voltage source. The output from the adder circuit is then supplied as the control signal to said head deflector.

In the prior art, as disclosed in patent specification U.S. 4,141,047 a reproducing system is provided with means for correcting tracking errors in a rotary head recording/reproducing system so as to correct deviations between the scanning path of a head and a record track on the record medium.

Conventionally, in reproduction, a plurality of video heads are mounted on an electro-mechanical transducer, to which a dither signal is applied. The positions of video heads with respect to the video tracks are detected from the dither signal and the envelopes of the signals reproduced by the video heads, thereby constituting a negative feedback loop to control tracking.

Such an arrangement, when using a plurality of video heads for reproduction, has each video head constituting a negative feedback loop on the basis of its reproduction envelope. As a result, the problem has been created in that it is impossible to discriminate whether each video head is scanning a desired track or an adjacent track and this is the cause of so-called track jumping.

The present invention provides a video signal reproducing apparatus for reproducing video signals from a magnetic tape on which video signals are recorded as video tracks inclined at an angle with respect to the lengthwise direction of said magnetic tape, said apparatus comprising a tracking device having video heads for scanning said video tracks to obtain reproduced signals, electromechanical transducer means for moving said video heads in a direction perpendicular to the scanning direction of said video tracks, a demodulator for demodulating said reproduced signals to obtain reproduced video signals, and a pulse processing circuit for detecting rotary phases of said video heads, a tracking control signal generating circuit for controlling positions of said video heads, thereby allowing said video heads to scan on said video tracks, an adder one input of which is connected to the output of the tracking control signal generating circuit characterised in that said apparatus further comprises a vertical synchronizing detector circuit for separating vertical synchronizing signals from said reproduced video signals, a time-voltage conversion circuit coupled to said vertical synchronizing detector circuit for converting a time corresponding to one field period to a voltage, a holding circuit for holding an output voltage of said time-voltage conversion circuit, a level comparison circuit coupled at inputs thereof to said time-voltage conversion circuit and to said holding circuit for comparing said voltage corresponding to said one field period from said holding circuit with a voltage corresponding to the next one field period from said time-voltage conversion circuit, a control voltage generating circuit for comparing an output voltage of said level comparison circuit with a reference voltage and generating a control voltage corresponding to a voltage difference between said output voltage of said level comparison circuit and said reference voltage, said control voltage from said voltage generating circuit being fed to a further input of the adder for addition with the output voltage from said tracking control signal generating signal so as to obtain a signal for applying to said electro-mechanical transducer, thereby allowing said video heads to scan on desired video tracks.

The tracking apparatus of the invention is such as to allow high quality reproduction during normal, slow-motion, or fast motion modes of reproduction.

Features and advantages of the present invention will become more apparent from the following description of a preferred embodiment when taken in conjunction with the accompanying drawings, in which:—

Figure 1 is a view of the principal portion of a video tape recorder;

Figure 2 is a view of an example of track patterns recorded on a magnetic tape;

Figures 3 (A), (B), (C), and (D) show waveforms to assist in understanding the operation of the apparatus shown in Figure 1;

Figures 4 (a), (b), (c), (d), (e), (f), (g), (h), and (i) each show a further waveform for assisting understanding of the operation of the apparatus shown in Figure 1;

Figure 5 is a block diagram of a time-voltage conversion unit used in an embodiment of the invention;

Figures 6 (a), (b), (c), and (d) show further waveforms for explaining the operation of the apparatus shown in Figure 1; and

Figures 7 (a), (b), (c), (d), (e), and (f) are waveforms of another example of operation of the apparatus shown in Figure 1.

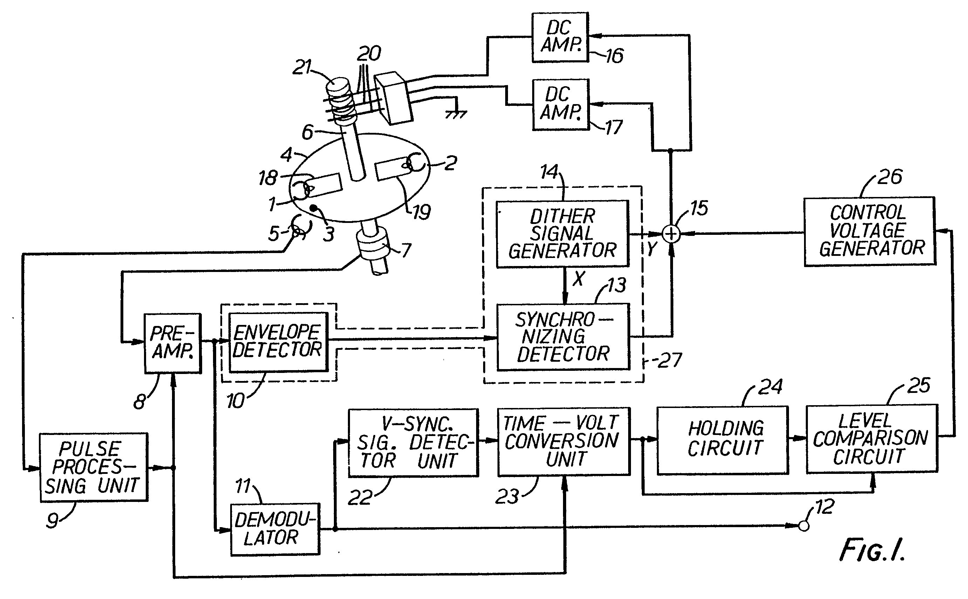

Figure 1 shows a block diagram of a principal portion of an embodiment of a video tape recording and reproducing apparatus including an auto-tracking apparatus, in which reference numerals 1 and 2 designate video heads having equal azimuth angles, e.g. 6°, and which are mounted on a free end of respective electro-mechanical transducers 18 and 19, such as bimorph type piezo-electric elements. The electric-mechanical transducers 18 and 19 are mounted at their other ends on a rotatable disc 4. A magnet 3 is mounted on the disc 4 and a stationary rotary phase detector 5 is provided adjacent the path of movement of the magnet 3 for detecting the rotary phases of the video heads 1 and 2. The disc 4 is driven by a d.c. motor (not shown) through a shaft 6 and rotates at a speed of about 30 Hz. Phase control of the disc 4 is well-known and is therefore omitted from this description. A magnetic tape (not shown) is wrapped around the circumference of the rotary disc 4 for about 180° and is driven at constant speed by a capstan and pinch rollers. Such magnetic tape drive system is well-known and not shown in the drawing or described in detail.

Output signals from the video heads 1 and 2 are fed via a rotary transformer 7 to a pre-amplifier 8. RF signals from video heads 1 and 2 are alternately switched at the pre-amplifier 8 by a signal (to be hereinafter called the head switch signal) comprising the output signal of the rotary phase detector 5 after processing by a pulse processing unit 9. The output from pre-amplifier 8 is fed to an envelope detector 10 and demodulator 11.

The envelope detector 10 forms part of a tracking control signal generator 27 which also includes a synchronizing detector 13 and a dither signal generator 14. The detector 10 detects amplitude distortion of RF signals reproduced by video heads 1 and 2 and provides an output signal which is fed to one input terminal of the synchronizing detector 13. An output signal of a dither signal generator 14 is fed to a second input terminal of synchronizing detector 13 whose output signal is fed to an adder 15 where it is added to a further output signal of the dither signal generator 14 and the thus produced signal is fed to DC amplifiers 16 and 17. The amplifiers ensure that the thus produced signal is amplified sufficiently to drive the transducers 18 and 19 and the output from the adder 15 is applied to the transducers via conductive brushes 20 and slip rings 21, the slip rings 21 being mounted on the shaft 6,

One output signal of demodulator 11 is fed to an output terminal 12 and the other output signal is fed to a time-voltage conversion unit 23 through a vertical synchronizing signal detecting unit 22. The output of the time-voltage conversion unit 23 is fed to a holding circuit 24 and directly to a level comparison circuit 25. The output of the holding circuit 24 is fed to the adder 15 via the level comparison circuit 25 and a control voltage generator 26.

Next, a conventional example and an embodiment of the invention will be detailed of their operations.

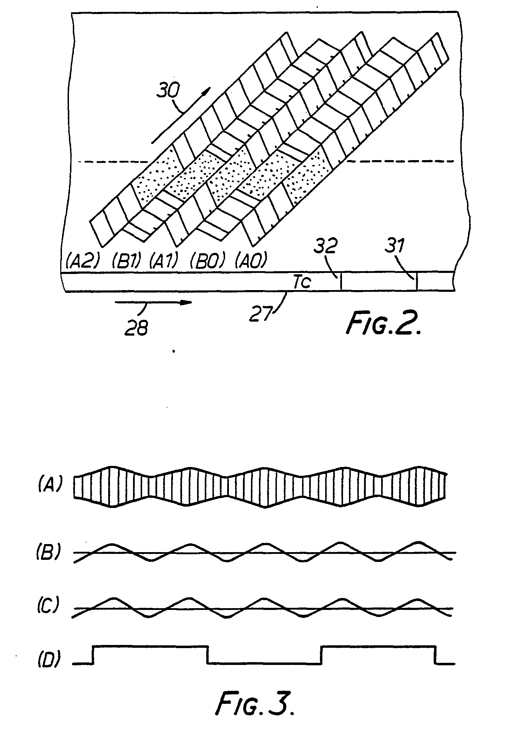

Figure 2 is a view exemplary of track patterns recorded on a magnetic tape 28, in which references $A_0$, $B_0$, $A_1$, $B_1$ and $A_2$ designate video tracks where one field of each video signal is recorded as a block i.e. it is not segmented. $A_0$, $A_1$ and $A_2$ are recorded by video heads (not shown) of an equal azimuth angle (+6° in this embodiment of the invention), and $B_0$ and $B_1$ by video heads (not shown) of another azimuth angle (−6° in this embodiment).

In addition, oblique lines at each track represent recording positions of horizontal synchronizing signals and dotted portions represent recorded positions of vertical synchronizing signals.

Tc designates a control track on which a control signal showing the recorded position of the video signal is recorded. A control signal 31 or 32 is recorded on the control track for each frame, so that the starting point of track $A_0$ and control signal 31, are recorded at the same timing and that of track $A_1$ and control signal 32 are recorded similarly.

Rotary phases of video heads 1 and 2 are detected using the magnet 3 and the rotary phase detector 5. Pulse processing unit 9 employs, for example, a mono-multi-viibrator circuit in three steps to obtain a head switching signal as shown in Figure 3 (D), in which it is assumed that the leading edge of the signal is coincident with the timing when video head 1 starts scanning a track, and that the trailing edge is coincident with the timing when video head 2 starts scanning a track. Hence, reproduced signals from video heads 1 and 2 are alternately applied to the preamplifier 8 by means of the head switch signal from the pulse processing unit 9, and converted into a continuous signal to be fed to the tracking control signal generator 27 and the demodulator 11. The envelope detector 10 of the tracking control signal generator 27 is supplied with the reproducing signal as shown in Figure 3 (A). Envelope detector 10 comprises a conventional diode detection circuit which generates an output signal as shown in Figure 3 (B). Synchronizing detector 13 is supplied with the envelope signal and the output signal from terminal X of dither signal generator 14 as shown in Figure 3 (C). As a result, when video head 1 is scanning video track $A_1$ as desired, if video head 1 shifts upwardly, the synchronizing detector 13 produces a negative voltage as the tracking control signal, and conversely, a positive voltage if video head 1 shifts downwardly; the output becomes zero when on track. Such a tracking control signal is added by adder 15 with the output signal (in phase with the output at terminal X) from terminal Y of the dither signal generator 14, and applied to transducers 18 and 19 through d.c. amplifiers 16 and 17, conductive brushes 20 and slip rings 21. Consequently, the scan positions of video heads 1 and 2 are compensated to be on track, thereby completing the control loop. In addition, RF signals shown in Figure 3 (A) represent upward shifts of video heads 1 and 2 with respect to track $A_1$.

However, RF signals the same as signals shown in Figure 3 (A) are given to complete the control loop when video head 1 scans track $A_1$ and video head 2 scans track $A_2$, so that both shift upwardly.

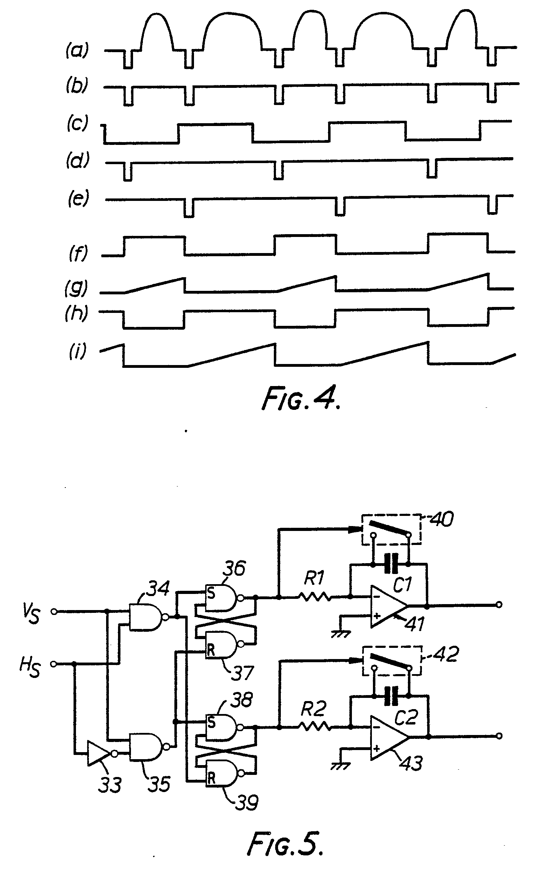

The demodulator 11 feeds the reproduced video signal shown in Figure 4 (a) to the vertical synchronizing signal detector unit 22 where the vertical synchronizing signal as shown in Figure 4 (b) is separated from the video signal and is fed to one input terminal of the time-voltage conversion circuit 23, whose other input terminal is supplied with the head switch signal as shown in Figure 4 (c), from pulse processing unit 9.

An example of the time-voltage conversion circuit 23 is shown in Figure 5 where an input terminal Vs is supplied with the vertical synchronizing signal shown in Figure 4 (b) and an input terminal $H_s$ is supplied with the head switch signal shown in Figure 4 (c). The input terminal $V_s$ is connected to one input terminal at a two input NAND gate circuit 34 and to one input terminal of a two input NAND gate 35. The input terminal $H_s$ is similarly fed into the other input terminal of NAND gate circuit 34 and into the other input terminal at NAND gate circuit 35 via an inverter 33. Hence, vertical synchronizing signals as shown in Figures 4 (d) and (e) are obtained at the outputs of NAND gate circuits 34 and 35 respectively. The output of the NAND gate 34 is fed to the set input terminal S of an RS flip-flop composed of NAND gates 36, 37 and to the reset input terminal R of a further RS flip-flop composed of NAND gates 38 and 39. Conversely, the output of the NAND gate 35 is connected to the reset terminal R of the RS flip-flop composed of NAND gates 36, 37 and to the set terminal S of the other RS flip-flop. At the outputs of the flip-flop circuits are obtained signals, as shown in Figures 4 (f) and (h), of synchronizing signals alternately set or reset as shown in Figures 4 (d) and (e). In addition, signals shown in Figures 4 (f) and (h) represent, for example, a time period of H level corresponding to one field time of video signal.

Next, in an integrating circuit comprising resistances $R_1$ and $R_2$, condensers $C_1$ and $C_2$, operational amplifiers 41 and 43, and switches 40 and 42, the respective condensers $C_1$ and $C_2$ are charged for a time period at H level of signal shown in Figures 4 (f) and (h), thereby obtaining signal voltages as shown in Figures 4 (g) and (i). Hence, measurement of crest values of wave forms of voltage shown in Figures 4 (g) and (i) means measurement of the reproduced video signal every one field. In addition, a difference is found between the crest values of voltage wave forms shown in Figures 4 (g) and (i), which is for the reason that the embodiment of the invention, as shown in Figure 2, reproduces magnetic tape 28 recorded at the azimuth angle. By use of video heads 1 and 2 of the same azimuth angles, and assuming that tape 28 is travelling at speed equal to that for recording, continuous RF signals as shown in Figure 3 (A) are obtained in such a manner that, for example, assuming that video head 1 scans video track $A_1$ at the first field, video head 2 tends to scan the starting point of video track $B_1$ at the second field. However, the aforesaid control loop allows video head 2 to move in a direction perpendicular with respect to the video track by one pitch of video track, whereby video head 2 scans video track $A_1$, which is because the vertical synchronizing signal cycles differ due to different scanning time between the starting point of video track scanning and the vertical synchronizing signal. In this instance, the vertical synchronizing signal cycles, when video tracks are recorded in a range of 1.5 H (1 H = one cycle of horizontal synchronizing signal), become 261 H and 264 H. As a result, the voltage wave forms shown in Figures 4 (g) and (i) are similarly different from each other.

Next, the crest value of voltage wave form in Figure 4 (g) is held for the next one field period by holding circuit 24 and compared with the crest value at the next field, i.e., voltage wave form in Figure 4 (i), by use of the level comparison circuit 25. The level comparison circuit 25 subtracts the voltage wave forms in Figures 4 (g) and (i) so as to output voltage corresponding to 261 H −264 H = −3 H. Control voltage generating circuit 26, when the output signal of level comparison circuit 25 is equal to reference voltage corresponding to the aforesaid −3 H, adds zero voltage to adder 15 assuming that no track jumping occurs.

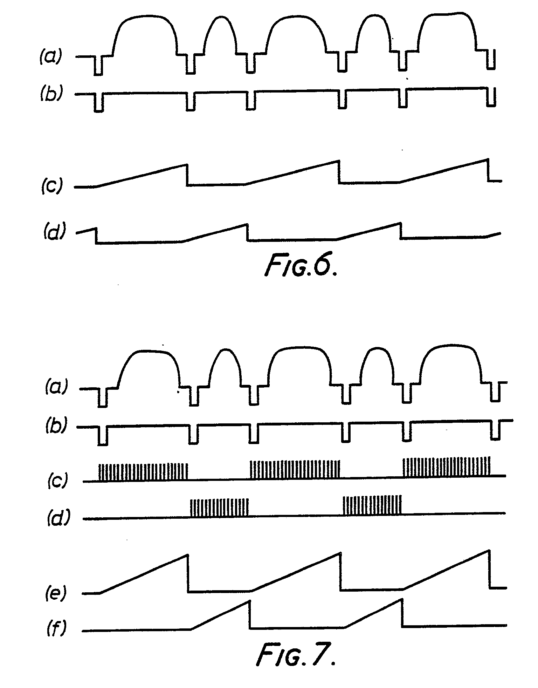

However, when the video head 2 scans tracks $A_2$, in other words, when the track jumping occurs, video signal shown in Figure 6 (a) is reproduced. Furthermore, vertical synchronizing signals as shown in Figure 6 (b) are reproduced. Voltage wave forms as shown in Figures 6 (c) and (d) are derived from the time-voltage conversion circuit 23. Level comparison circuit 25, which is driven similarly to the case in Figure 4 by the vertical synchronizing signal in Figure 6 (b) separated from the video signal shown in Figure 6 (a), outputs voltage corresponding to 264 H − 261 H = 3 H. Control voltage generating circuit 26 is constructed to discriminate the occurrence of no track-jumping when level comparison voltage at the first and second fields is equal to reference voltage corresponding to −3 H. Hence, since level comparison circuit 25, in Figure 6, outputs voltage coresponding to +3 H, control voltage generating circuit 26 feeds to adder 15 voltage necessary to move video head 2 downwardly at two pitches of video track.

Accordingly, by using the above arrangement, the video heads 1 and 2 can be kept in an on-track condition by means of the control loop while compensating the track jumping.

In addition, in the embodiment of the invention, the magnetic tape speed during reproduction is equal to that during recording, but the track jumping of course, can be discriminated at different speeds using the same construction.

In the embodiment of the invention, the video heads of single azimuth angle (+6° in the embodiment) reproduce the video tracks comprising video tracks recorded by the video head of an azimuth angle of +6° and those recorded by the video head of an azimuth angle of −6°, which are arranged alternately with each other. Alternatively, a combination of video head of an azimuth angle of +6° with video head of that of −6° may detect the track jumping through the same construction for reproduction. Alternatively, for example, when voltage wave forms in Figures 7 (e) and (f) corresponding to the number of horizontal synchronizing signals shown in Figures 7 (c) and (d) and reproduced for a time period at H level of signal wave forms as shown in Figures 4 (f) and (h) is compared with level comparison circuit 25, the same effect is obtainable in the embodiment of the invention because of the above comparison means measurement of the vertical synchronizing signal cycles. In addition, wave forms shown in Figures 7 (a) and (b) correspond to wave forms shown in Figures 6 (a) and (b).

## Claims

1. A video signal reproducing apparatus for reproducing video signals from a magnetic tape on which video signals are recorded as video tracks inclined at an angle with respect to the lengthwise direction of said magnetic tape, said apparatus comprising a tracking device (27) having video heads (1, 2) for scanning said video tracks to obtain reproduced signals, electro-mechanical transducer means (18, 19) for moving said video heads in a direction perpendicular to the scanning direction of said video tracks, a demodulator (11) for demodulating said reproduced signals to obtain reproduced video signals, and a pulse processing circuit (9) for detecting rotary phases of said video heads, a tracking control signal generating circuit (27) for controlling positions of said video heads (1, 2) thereby allowing said video heads (1, 2) to scan on said video tracks, an adder (15) one input of which is connected to the output of the tracking control signal generating circuit (27) characterised in that said apparatus further comprises a vertical synchronizing detector circuit (22) for separating vertical synchronizing signals from said reproduced video signals, a time-voltage conversion circuit (23) coupled to said vertical synchronizing detector circuit (22) for converting a time corresponding to one field period to a voltage, a holding circuit (24) for holding an output voltage of said time-voltage conversion circuit, a level comparison circuit (25) coupled at inputs thereof to said time-voltage conversion circuit (23) and to said holding circuit (24) for comparing said voltage corresponding to said one field period from said holding circuit (24) with a voltage corresponding to the next one field period from said time-voltage conversion circuit (23), a control voltage generating circuit (26) for comparing an output voltage of said level comparison circuit (25) with a reference voltage and generating a control voltage corresponding to a voltage difference between said output voltage of said level comparison circuit (25) and said reference voltage, said control voltage from said voltage generating circuit (26) being fed to a further input of the adder (15) for addition with the output voltage from said tracking control signal generating signal (27) so as to obtain a signal for applying to said electro-mechanical transducer (18, 19), thereby allowing said video heads (1, 2) to scan on desired video tracks.

2. A tracking apparatus according to claim 1, wherein said tracking control signal generating circuit (27) comprises an envelope detector (10) which detects envelope components in reproduced signals reproduced by said video heads, a dither signal generator (14) for generating dither signal applied to said electro-mechanical transducer means in order to vibrate said video heads, and a synchronizing detector (13) which synchronously detects the output signal of said envelope detector and the dither signal, thereby using signals of a sum of said dither signal and output of said synchronizing detector.

3. A tracking apparatus according to claim 1, wherein said time-voltage conversion circuit (23) serves to convert into voltage the number of horizontal synchronizing signals between said vertical synchronizing signals.

## Revendications

1. Appareil de reproduction de signal vidéo destiné à reproduire des signaux vidéo à partir d'une bande magnétique sur laquelle des signaux vidéo sont enregistrés comme des pistes vidéo inclinées sous un angle par rapport à la direction longitudinale de ladite bande magnétique, ledit appareil comprenant un dispositif d'alignement (27) portant des têtes vidéo (1, 2) pour analyser lesdites pistes vidéo et obtenir des signaux reproduits, un dispositif transducteur électro-mécanique (18, 19) destiné à déplacer lesdites têtes vidéo dans une direction perpendiculaire à la direction d'analyse de ladite piste vidéo, un démodulateur (11) pour démoduler lesdits signaux reproduits et obtenir des signaux vidéo reproduits et un circuit (9) de traitement d'impulsions destiné à détecter les phases en rotation desdites têtes vidéo, un circuit (27) générateur de signal de commande d'alignement destiné à commander les positions desdites têtes vidéo (1, 2) en permettant

9      **O 030 469**      10

ainsi que lesdites têtes vidéo (1, 2) analysent lesdites pistes vidéo, un additionneur (15), dont une entrée est connectée à la sortie dudit circuit (27) générateur de signal de commande d'alignement, caractérisé ence que ledit appareil comporte en outre un circuit (22) détecteur de synchronisation verticale, destiné à séparer les signaux de synchronisation verticale, desdits signaux vidéo reproduits, un circuit (23) de conversion de temps en tension couplé avec ledit circuit (22) de détecteur de synchronisation verticale pour convertir un temps correspondant à une période de trame en une tension, un circuit de maintien (24) destiné à maintenir une tension de sortie dudit circuit de conversion de temps en tension un circuit (25) de comparaison de niveau couplé par ses entrées audit circuit (23) de conversion de temps en tension et audit circuit de maintien (24) pour comparer ladite tension correspondante à ladite période d'une trame provenant dudit circuit de maintien (24) avec une tension correspondant à une période de trame suivant provenant dudit circuit (23) de conversion de tempts en tension, un circuit (26) générateur de tension de commande destiné à comparer une tension de sortie dudit circuit (25) de comparaison de niveau avec une tension de référence et produisant une tension de commande correspondant à une différence de tension entre ladite tension de sortie dudit circuit (25) de comparaison de niveau et ladite tension de référence, ladite tension de commande provenant dudit circuit (26) générateur de tension étant appliquée à une autre entrée de l'additionneur (15) pour être additionnée avec la tension de sortie dudit signal (27) générateur de signal de commande d'alignement de manière à obtenir un signal pour l'application audit transducteur électro-mécanique (18, 19), permettant ainsi que lesdites têtes vidéo (1, 2) analysent lesdites pistes vidéo voulues.

2. Appareil d'alignement selon la revendication 1, dans lequel ledit circuit (27) générateur de signal de commande d'alignement comporte un détecteur d'enveloppe (10) qui détecte les composantes d'enveloppe dans les signaux reproduits par lesdites têtes vidéo, un générateur (14) de signal oscillatoire qui produit un signal oscillatoire appliqué audit dispositif transducteur électro-mécanisque afin de faire vibrer lesdites têtes vidéo et un détecteur de synchronisation (13) qui détecte en synchronisme le signal de sortie dudit détecteur d'enveloppe et le signal oscillatoire, de manière à utiliser les signaux d'une somme dudit signal oscillatoire et de la sortie dudit détecteur de synchronisation.

3. Appareil d'alignement selon la revendication 1, dans lequel ledit circuit (23) de conversion de temps en tension sert à convertir en une tension le nombre des signaux de synchronisation horizontale entre lesdits signaux de synchronisation verticale.

**Patentansprüche**

1. Videosignal-Wiedergabegerät zum Wiedergeben von Videosignalen von einem Magnetband auf dem Videosignale als Videospuren aufgezeichnet sind, die unter einem Winkel bezüglich der Längsrichtung des Magnetbands geneigt sind, wobei das Gerät aufweist eine Spurverfolgungsvorrichtung (27) mit Videoköpfen (1, 2) zum Abtasten der Videospuren, um wiedergegebene Signale zu erhalten, elektromechanische Wandlermittel (18, 19) zum Bewegen der Videoköpfe in Richtung senkrecht zu der Abtastrichtung der Videospuren, einen Demodulator (11) zum Demodulieren der wiedergegebenen Signale, um wiedergegebene Videosignale zu erhalten, und eine Impulsverarbeitungsschaltung (9) zum Detektieren von Drehphasen der Videoköpfe, eine Spurverfolgungssteuersignalerzeugungsschaltung (27) zum Steuern von Positionen der Videoköpfe (1, 2), wodurch die Videoköpfe (1, 2) auf den Videospuren abtasten können, einen Addierer (15), dessen einer Eingang mit dem Ausgang der Spurverfolgungssteuersignalerzeugungsschaltung (27) verbunden ist, dadurch gekennzeichnet, daß das Gerät ferner aufweist eine Vertikalsynchronisier-Detektorschaltung (22) zum Trennen von vertikalen Synchronisiersignalen von den wiedergegebenen Videosignalen, eine Zeit-Spannungs-Umwandlungsschaltung (23), die mit der Vertikalsynchronisier-Detektorschaltung (22) zum Umwandeln einer einer Feldperiode entsprechednen Zeit in eine Spannung gekoppelt ist, eine Halteschaltung (24) zum Halten einer Ausgangsspannung der Zeit-Spannungs-Umwandlungsschaltung, eine Pegelvergleichsschaltung (25), die mit ihren Eingängen mit der Zeit-Spannungs-Umwandlungsschaltung (23) und der Halteschaltung (24) zum Vergleichen der einer Feldperiode entsprechenden Spannung von der Halteschaltung (24) mit einer Spannung entsprechend der nächsten Feldperiode von der Zeit-Spannungs-Umwandlungsschaltung (23) gekoppelt ist, eine Steuerspannung-Erzeugungsschaltung (26) zum Vergleichen einer Ausgangsspannung der Pegelvergleichsschaltung (25) mit einer Bezugsspannung und zum Erzeugen einer Steuerspannung entsprechend einer Spannungsdifferenz zwischen der Ausgangsspannung der Pegelvergleichsschaltung (25) und der Bezugsspannung, wobei die Steuerspannung von der Spannungserzeugungsschaltung (26) einen weiteren Eingang des Addierers (15) zur Addition mit der Ausgangsspannung von dem Spurverfolgungssteuersignal-Erzeugungssignal (27) zugeführt wird, um ein Signal zum Anlegen an den elektromechanischen Wandler (18, 19) zu erhalten, wodurch die Videoköpfe (1, 2) auf gewünschten Videospuren abtasten können.

2. Spurverfolgungsgerät nach Anspruch 1, wobei die Spurverfolgungssteuersignal-Erzeugungsschaltung (27) aufweist einen Hüllendetektor (10), der Hüllenkomponenten in den durch die Videoköpfe wiedergegebenen Signalen feststellt, einen Zittersignal generator (14) zum Erzeugen eines Zittersignals, das an die elektromechanischen Wandlermittel angelegt wird, um die Videoköpfe in Schwingung zu versetzen, und einen Synchronisierdetektor (13), der synchron das Ausgangssignal des Hüllendetektors und das Zittersignal detektiert, wobei er Signale einer Summe des Zittersignals und des Ausgangssignals des Synchronisierdetektors verwendet.

3. Spurverfolgungsgerät nach Anspruch 1, wobei die Zeit-Spannung-Umwandlungsschaltung (23) dazu dient, die Anzahl horizontaler Synchronisiersignale zwischen den vertikalen Synchronisiersignalen in eine Spannung umzuwandeln.

**Fig.I.**

CONTROL VOLTAGE GENERATOR — 26

LEVEL COMPARISON CIRCUIT — 25

HOLDING CIRCUIT — 24

DITHER SIGNAL GENERATOR — 14

SYNCHRO— NIZING DETECTOR — 13

TIME — VOLT CONVERSION UNIT — 23

V—SYNC. SIG. DETEC— TOR UNIT — 22

DC AMP. — 16

DC AMP. — 17

ENVELOPE DETECTOR — 10

PRE— AMP. — 8

DEMODU— LATOR — 11

PULSE PROCES— SING UNIT — 9

15  27  12  20  21  2  19  7  6  4  18  1  5  3  77

(A2) (B1) (A1) (B0) (A0)

FIG.2.

(A)

(B)

(C)

(D)

FIG.3.

FIG.4.

FIG.5.

(a)

(b)

(c)

(d)

*FIG.6.*

(a)

(b)

(c)

(d)

(e)

(f)

*FIG.7.*